# EUROPEAN PATENT SPECIFICATION

(11) **EP 4 199 697 B1**
(45) Date of publication and mention of the grant of the patent: **10.12.2025**
(21) Application number: 21858704.6
(22) Date of filing: 17.08.2021
(51) Int. Cl.: A01G 3/08

(54) **A DRIVESHAFT AND AN OUTDOOR POWER EQUIPMENT COMPRISING SUCH DRIVESHAFT**
ANTRIEBSWELLE UND AUSSENANTRIEBSAUSRÜSTUNG MIT SOLCH EINER ANTRIEBSWELLE
ARBRE D'ENTRAÎNEMENT ET ÉQUIPEMENT MOTORISÉ D'EXTÉRIEUR COMPRENANT UN TEL ARBRE D'ENTRAÎNEMENT

(30) Priority: 21.08.2020 US 202063068556 P
(43) Date of publication of application: 28.06.2023
(73) Proprietor: Husqvarna AB, 561 82 Huskvarna (SE)
(72) Inventor: OSTERCHILL, Jeffrey J., Davidsson, NC 28036 (US); WHITE, Camden, Huntersville, NC 28078 (US); CURTIS, Andrew L., Charlotte, NC 28269 (US)
(86) International application number: PCT/SE2021/050797
(87) International publication number: WO 2022/039649

(56) References cited:
- WO-A1-2007/134440
- WO-A1-2016/184959
- CN-A- 105 265 105
- US-A- 4 654 971
- US-A1- 2005 086 813
- US-A1- 2020 230 798

## Description

### TECHNICAL FIELD

The application relates to a driveshaft for outdoor power equipment, more particularly, relate to a non-conductive driveshaft for use e.g. in a pole saw.

### BACKGROUND

Property maintenance tasks are commonly performed using various tools and/or machines that are configured for the performance of corresponding specific tasks. Some of those tools, like chainsaws, are designed to be effective at felling trees or at cutting felled trees. However, sometimes operators may need or wish to cut individual branches at heights above the operator's head, or even outside the reach of the operator. Accordingly, pole saws have been developed to facilitate cutting in such situations. The pole saws may either be manually operated or powered.

In some cases, pole saws may be used in the vicinity of high voltage wires. Since a typical powered pole saw has a conductive mechanical connection between the powerhead and the cutting attachment, there could be a risk of shock if the operator accidentally contacts the high voltage wires. Thus, a manually operated pole saw would typically be used in such situations, and the manually operated pole saw would have a dielectric (e.g., insulated) construction.
WO2016184959A1 shows a tree pruner where the drive shaft and the protective sleeve are of electrical insulating material, so that the stem (3) electrically isolates the head from the engine or motor. The sleeve and shaft insulating material is fiberglass. The drive shaft insulated section is located between proximal and distal sections of the drive shaft.
US2020230798A1 a pole saw where the driveshaft extending between the powerhead and the working element is constructed of a non-conductive material to inhibit transmission of electricity from the working element to the powerhead.

### BRIEF SUMMARY OF SOME EXAMPLES

Some example embodiments may provide a powered pole saw with a dielectric construction. Thus, example embodiments may enable powered pole saw operation with confidence in safety in more use contexts.

In a first aspect according to the invention, a driveshaft for outdoor power equipment as defined in claim 1 is provided.

In another aspect according to the invention, an outdoor power equipment device is provided. The device includes a power head, a cutting attachment and the above mentioned driveshaft.

Some example embodiments may improve the user experience, safety, and/or productivity during use of outdoor powered equipment.

### BRIEF DESCRIPTION OF THE SEVERAL VIEWS OF THE DRAWING(S)

Having thus described some example embodiments in general terms, reference will now be made to the accompanying drawings, which are not necessarily drawn to scale, and wherein:
FIG. 1, which is defined by FIGS. 1A and 1B, illustrates a perspective view and side view, respectively, of a pole saw in accordance with an example embodiment;
FIG. 2, which is defined by FIGS. 2A, 2B and 2C, illustrates a perspective view of a driveshaft in isolation, various segments thereof, and a single segment in isolation, respectively, in accordance with an example embodiment;
FIG. 3, which is defined by FIGS. 3A and 3B, illustrates cross section views of the driveshaft in accordance with an example embodiment;
FIG. 4, which is defined by FIGS. 4A, 4B, 4C, 4D, 4E and 4F, illustrates various components of the driveshaft in accordance with an example embodiment; and
FIG. 5 is a block diagram of a device having a driveshaft in accordance with an example embodiment.

### DETAILED DESCRIPTION

Some example embodiments now will be described more fully hereinafter with reference to the accompanying drawings, in which some, but not all example embodiments are shown. Indeed, the examples described and pictured herein should not be construed as being limiting as to the scope, applicability or configuration of the present disclosure. Rather, these example embodiments are provided so that this disclosure will satisfy applicable legal requirements. Like reference numerals refer to like elements throughout. Furthermore, as used herein, the term "or" is to be interpreted as a logical operator that results in true whenever one or more of its operands are true. As used herein, operable coupling should be understood to relate to direct or indirect connection that, in either case, enables functional interconnection or interaction of components that are operably coupled to each other.

Some example embodiments provide a powered pole saw that electrically isolates the power head from the cutting attachment via a dielectric driveshaft. Not only the driveshaft is dielectric, and therefore electrically insulated, but the driveshaft is further made of segments that have bearing support between each respective segment. Optionally the segments may also have bushing support between each respective segment. Furthermore, in some embodiments, the segments may be vented to allow the release of trapped gasses or pressure that may build up therein.

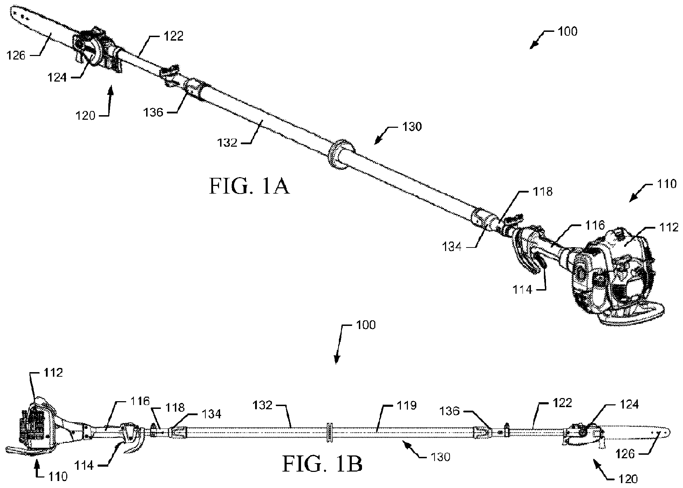

FIG. 1, which is defined by FIGS. 1A and 1B, illustrates an example embodiment being applied where the outdoor power equipment (e.g., pole saw 100) includes a power head 110 that is operably coupled (e.g., permanently or removably) to a cutting attachment 120 via a dielectric or insulated driveshaft 130. Although the power head 110 could take many different forms, the power head 110 of FIG. 1 includes a power source 112 (e.g., a battery powered, electric motor or a gasoline/petrol engine) that is operable responsive to actuation of a trigger 114 while the operators grasps handle 116. The power head 110 of this example is operably coupled directly to the driveshaft 130 via a coupler 118. Although not shown, a spline portion (e.g., having a female fitting) may extend along a longitudinal axis 119 of the pole saw 100 into the coupler 118 in order to mate with a corresponding spline portion (e.g., having a male fitting) of the driveshaft 130. However, it should be appreciated that other joining methods/structures are also possible other than a spline. For example, male/female fittings with any shape (hex, square, etc.) could alternatively be employed among other options. Responsive to actuation of the trigger 114, the power source 112 may turn the spline portion, which turning may then be translated to the driveshaft 130 (via the spline portion of the driveshaft 130).

The driveshaft 130 communicate the drive power provided from the power head 110 to the cutting attachment 120. In this regard, for example, the cutting attachment 120 may include a coupling shaft 122. The coupling shaft 122 may include a spline portion (e.g., having a male fitting) that could couple the coupling shaft 122 to the driveshaft 130 as described in greater detail below. The spline portion of the coupling shaft 122 may turn and thereby power through saw body 124 to turn a cutting chain about guide bar 126. The saw body 124 may include an oil reservoir for enabling the guide bar, sprocket and/or other components of the saw body 124 to be lubricated.

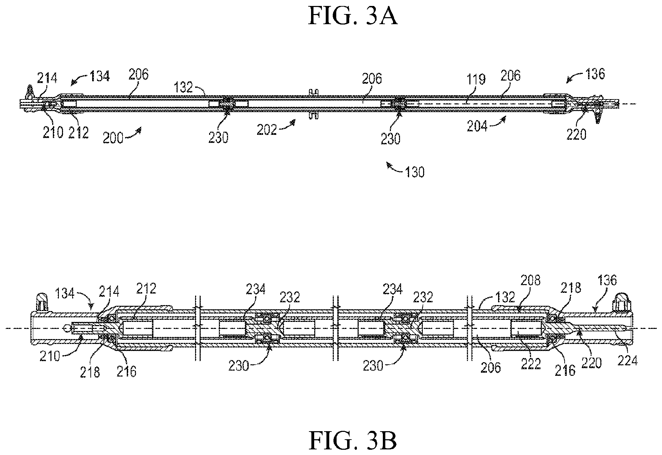

The driveshaft 130 includes an external housing 132 that extends between a first coupler 134 and a second coupler 136. The first coupler 134 and the second coupler 136 may each include the corresponding spline portions mentioned above (see elements 210 and 220 in FIG. 3A), and may be configured to mate with the coupler 118 of the power head 110 and the coupling shaft 122 of the cutting attachment 120, respectively. The first and second couplers 134 and 136 may be configured for tool-less attachment to the coupler 118 of the power head 110 and the coupling shaft 122 of the cutting attachment 120, respectively. Thus, for example, a wing knob or other threaded fastener, which can be operated by hand only, and without any need for tools, may be provided at one or both of the first and second couplers 134 and 136. However, in some cases, a tool may be employed to operate the first and second couplers 134 and 136.

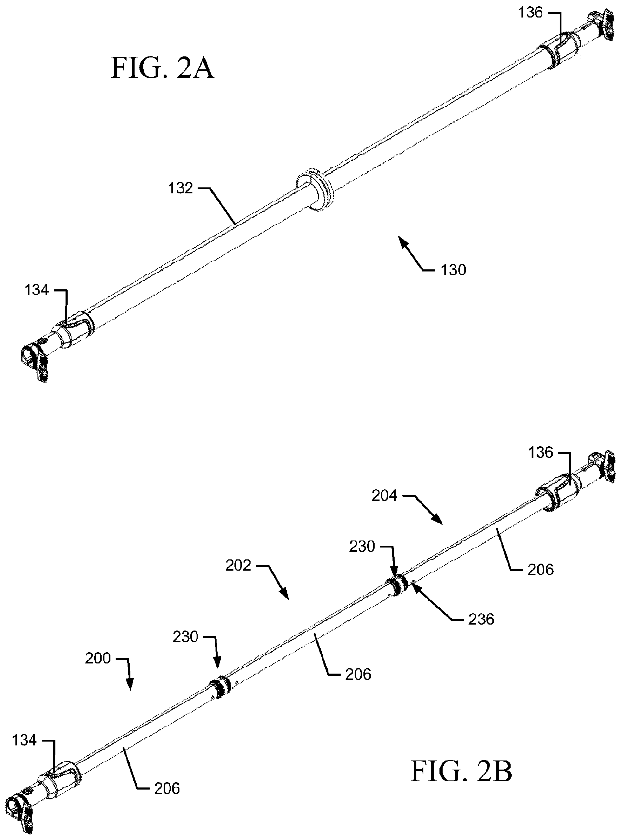

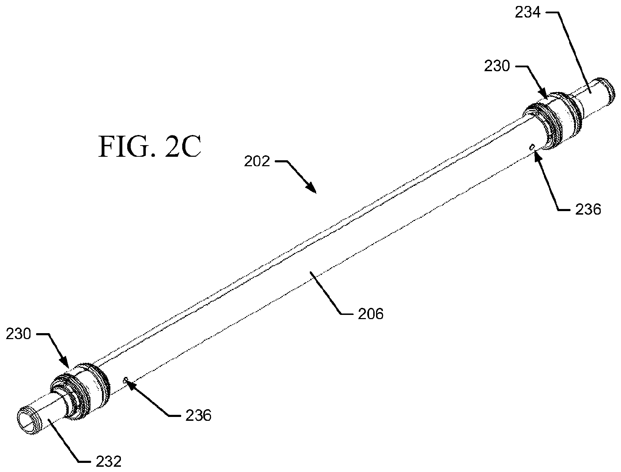

A perspective view of the driveshaft 130 is shown in isolation in FIG. 2A. Meanwhile, in FIG. 2B, the external housing 132 is removed in order to expose internal components of the driveshaft 130. In this regard, FIG. 2B shows multiple segments (e.g., a first segment 200, a second segment 202 and a third segment 204) that is used to form the internal rotary shaft of the driveshaft 130, via which rotary power is actually transferred between the power head 110 and the cutting attachment 120. However, more or fewer than three segments (of equal or unequal lengths) may be used in alternative embodiments. FIG. 2C shows one segment (i.e., the second segment 202) in isolation along with portions of segment couplers that are used to operably couple the first segment 200 to the second segment 202, and the second segment 202 to the third segment 204, respectively. Each of the first, second and third segments 200, 202 and 204 includes a segment shaft body 206. Each of the segment shaft bodies 206 may be a substantially hollow, cylindrical tube that is made of non-conductive material (e.g., fiberglass). However, shapes other than cylindrical tubes may alternatively be employed. Notably, an air gap 208 (see FIG. 3B) may exist outside of each of the segment shaft bodies 206 between the segment shaft body 206 and the external housing 132. The air gap 208 may enable the first, second and third segments 200, 202 and 204 to freely turn within the external housing 132 without any contact therebetween.

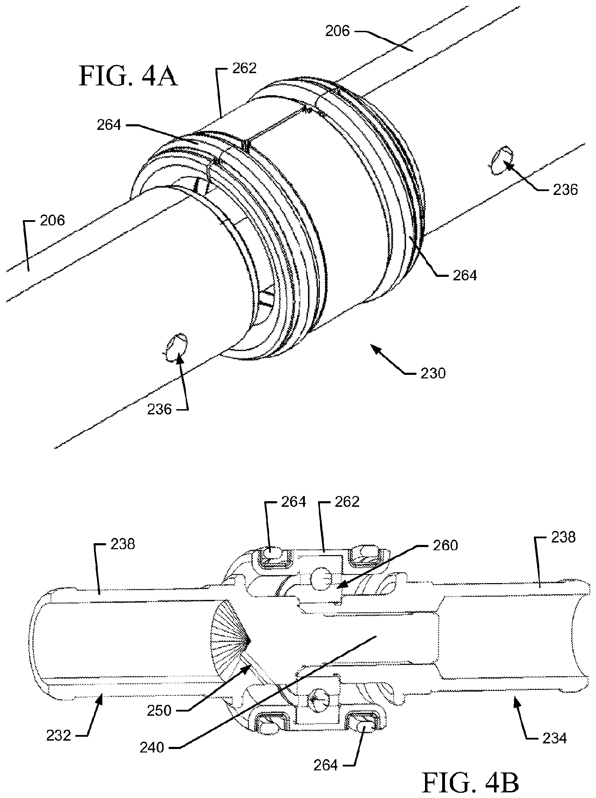

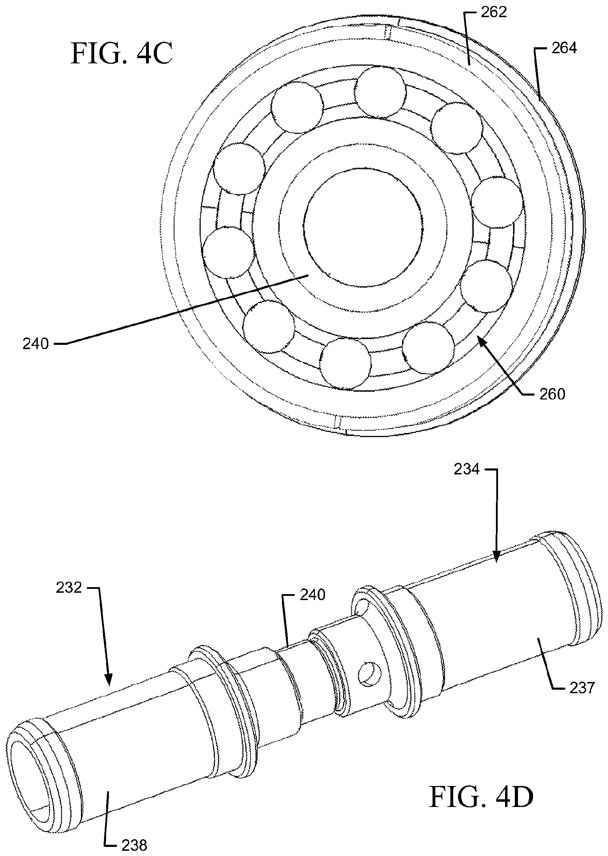

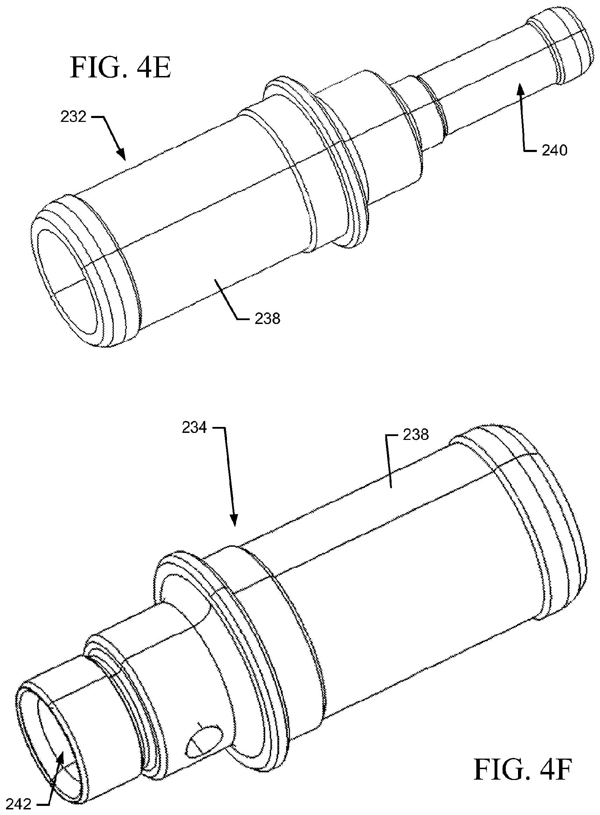

FIG. 3, which is defined by FIGS. 3A and 3B, illustrate cross section views of the driveshaft 130 taken along a plane passing through the longitudinal axis 119 of FIG. 1. FIG. 3A shows a full cross section view of the driveshaft 130. Meanwhile, in FIG. 3B, some portions are removed in order to enable a closer view of the internal components of the driveshaft 130. FIG. 4, which is defined by FIGS. 4A, 4B, 4C, 4D, 4E and 4F, shows various additional views of the internal components of the driveshaft 130.

Referring now primarily to FIGS. 2-4, it can be appreciated that the external housing 132 of the driveshaft 130 may be a continuous hollow, cylindrical tube that extends between the first and second couplers 134 and 136. That said, non-continuous tubes may be used in alternative embodiments. In an example embodiment, the external housing 132 may be made of fiberglass or another non-conductive material. Furthermore, the external housing 132 is fixed to each of the first and second couplers 134 and 136 (and therefore does not rotate). The first and second couplers 134 and 136 may each have cylindrical and hollow receiver portions inside which respective opposing ends of the external housing 132 may be disposed (and fixed). In some cases, the opposing ends of the external housing 132 may be fixed to the receiver portions of the first and second couplers 134 and 136, respectively, with fasteners. However, friction fittings, adhesives or other fixing means may be used in alternative embodiments.

As shown in FIG. 3, the first coupler 134 may house a female spline member 210 of the first segment 200. Meanwhile, the second coupler 136 may include a male spline member 220 of the third segment 204. However, it should be appreciated that the male/female arrangements could be reversed dependent upon the structures of the power head 110 and the cutting attachment 120. The male and female spline members 210 and 220 may each be made of metallic materials or other such strong materials.

The female spline member 210 may include a cup portion 212 and a shaft portion 214. The female fitting may be disposed at the distal end of the shaft portion 214. The cup portion 212 may be a substantially hollow, cylindrical portion that has an external diameter that is slightly smaller than an internal diameter of the segment shaft body 206. The segment shaft body 206 and the cup portion 212 may then be affixed to each other via friction fitting, adhesive, and/or one or more fasteners. In some cases, a combination of a press fit and epoxy may be used to fix the segment shaft body 206 and the cup portion 212 together.

In an example embodiment, the shaft portion 214 has a smaller diameter than the cup portion 212. The transition between the shaft portion 212 and the cup portion 214 may therefore also be a location at which the female spline member 210 interfaces with the first coupler 134. In this regard, for example, the first coupler 134 may also transition in diameter proximate to the interface with the female spline member 210, and the first coupler 134 may include a bearing assembly 216 and a shaft seal 218 (e.g., a swiping shaft seal) that rotatably support the female spline member 210 within the first coupler 134.

The male spline member 220 may similarly include a cup portion 222 and a shaft portion 224. The male fitting may be disposed at the distal end of the shaft portion 224. The cup portion 222 may be a substantially hollow, cylindrical portion that has an external diameter that is slightly smaller than an internal diameter of the segment shaft body 206. The segment shaft body 206 and the cup portion 222 may then be affixed to each other via friction fitting, adhesive, and/or one or more fasteners (e.g., a combination of a press fit and epoxy).

In an example embodiment, the shaft portion 224 has a smaller diameter than the cup portion 222. The transition between the shaft portion 222 and the cup portion 224 may therefore also be a location at which the male spline member 220 interfaces with the second coupler 136. In this regard, for example, the second coupler 136 may also transition in diameter proximate to the interface with the male spline member 220, and the second coupler 136 may include a bearing assembly 226 and a shaft seal 228 (e.g., a swiping shaft seal) that rotatably support the male spline member 220 within the second coupler 136.

The segment shaft body 206 of the first segment 200 and the segment shaft body 206 of the third segment 204 may extend toward each other to engage respective segment couplers 230 that operably couple the first and third segments 200 and 204 to the opposing respective ends of the second segment 202. FIG. 2C illustrates the second segment 202 and the segment couplers 230 on each opposing end thereof. Portions of the segment couplers 230 are shown in greater detail in FIG. 4.

In an example embodiment, each of the segment couplers 230 include a first body engagement portion 232 and a second body engagement portion 234. The first and second body engagement portions 232 and 234 may be structured substantially similarly to the cup portions 212 and 222 described above (e.g., they may each be made of metallic materials). Moreover, each of the first and second body engagement portions 232 and 234 may be operably coupled to ends of respective instances of the segment shaft body 206 in a similar manner to how the cup portions 212 and 222 are connected to the segment shaft body 206 as described above. For example, orifices 236 formed in the segment shaft body 206 may enable epoxy to be inserted between the first and second body engagement portions 232 and 234 and corresponding portions of the segment shaft body 206. More specifically, the first and second body engagement portions 232 and 234 may each include a cup portion 238 similar to the cup portions 212 and 222 described above.

As shown in FIGS. 4E and 4F, the first body engagement portion 232 may include a shaft 240, which may extend into a corresponding receiver 242 of the second body engagement portion 234. In some cases, the shaft 240 and receiver 242 may each have a hex, star or other unique corresponding shape configuration to enable the shaft 240 to socket into the receiver 242. However, other coupling strategies may alternatively be employed. For example, any combination or friction fitting, adhesives, fasteners, etc., may be employed to affix the first body engagement portion 232 to the second body engagement portion 234. In an example embodiment, the cup portions 238 of the first and second body engagement portions 232 and 234 may be disposed opposite either the shaft 240 or the receiver 242, respectively.

In some examples, one or both of the first and second body engagement portions 232 and 234 may include a vent 250 (see FIG. 4B). The vent 250 may extend from inside the first and second body engagement portions 232 and 234 to a portion outside thereof. As such, the area inside each of the first, second and third segments 200, 202 and 204 may be vented to the air gap 208. By venting the inside to the outside of the first, second and third segments 200, 202 and 204, any trapped pressure or gasses that may otherwise build up in any or each of the segments may be released.

The segment couplers 230 also include a bearing assembly 260, which may be supported between respective ones of the first, second and third segments 200, 202 and 204 by a carrier assembly 262. The carrier assembly 262 of some examples may be a plastic or other non-conductive structure comprised of two case halves, which may be held together by one or more rubber o-rings 264. In this example, the carrier assembly 262 has an external diameter that is slightly smaller than an internal diameter of the external housing 132. Thus, particularly when the o-rings 264 are in place, the o-rings 264 and the carrier assembly 262 may both engage the inside of the external housing 132 to rotatably support the first and second body engagement portions 232 and 234, and divide the air gap 208 into respective parts that correspond to the first, second and third segments 200, 202 and 204.

The carrier assembly 262 may be structured to retain the bearing assembly 260 in a fixed location, and the bearing assembly 260 may further interface with one or both of the first and second body engagement portions 232 and 234 to rotatably support the first and second body engagement portions 232 and 234. As shown in FIGS. 4B and 4C, which are cross sections along the axis 219 and perpendicular to the axis 219, respectively, the bearing assembly 260 may include ball bearings disposed between inner and outer rings. Accordingly, the first and second body engagement portions 232 and 234 may rotate with the inner ring while the outer ring may remain fixed with the carrier assembly 262 and the external housing 132.

As can be appreciated from the descriptions above, the power head 110 is operably coupled to one of the female spline member 210 or the male spline member 220, and the cutting attachment 120 is operably coupled to the other of the male spline member 220 or the female spline member 210. Meanwhile, the driveshaft 130 is structured so that the entirety of the external housing 132 is both fixed and non-conductive (e.g., dielectric), while the first, second and third segments 200, 202 and 204 are operably coupled to the female spline member 210 or the male spline member 220 to rotate therewith inside the external housing 132. In this regard, for example, the segment shaft body 206 of each of the first, second and third segments 200, 202 and 204 is rigidly and fixedly coupled to respective ones of the female spline member 210, the male spline member 220, and the segment couplers 230 to create a continuous shaft that rotates responsive to power application from the power head 110.

In accordance with this example, the power head 110 rotates the female spline member 210, which in turn rotates the segment shaft body 206 of the first segment 200, which is rigidly coupled thereto. The segment shaft body 206 of the first segment 200 is rigidly coupled to the segment coupler 230 disposed between the first and second segments 200 and 202 and thereby rotates the segment shaft body 206 of the second segment 202, which is rigidly coupled to the segment coupler 230. The segment shaft body 206 of the second segment 202 is then rigidly coupled to the segment coupler 230 disposed between the second and third segments 202 and thereby rotates the segment shaft body 206 of the third segment 204, which is rigidly coupled to the segment coupler 230. The segment shaft body 206 of the third segment 204 is then also rigidly coupled to the male spline member 220, which is operably coupled to the cutting attachment 120.

Although the female spline member 210, the male spline member 220, and the segment couplers 230 may each include metallic materials, none of these components contact each other. Moreover, the only components connecting the female spline member 210, the male spline member 220, and the segment couplers 230 (i.e., primarily the segment shaft body 206 of each respective segment) are non-metallic and therefore dielectric or insulating. Thus, while the driveshaft 130 includes a continuous mechanical connection from the power head 110 to the cutting attachment 120, any potential path for electrical connection between the power head 110 and the cutting attachment 120 is substantially insulated. Example embodiments therefore provide a rugged and fully functional driveshaft 130 that operably couples rotating power efficiently, while also providing full electrical isolation between the power head 110 and the cutting attachment 120. Any inadvertent contact of the cutting attachment 120 with electrical wires or some other power source could then not be transmitted through the driveshaft 130 to the operator.

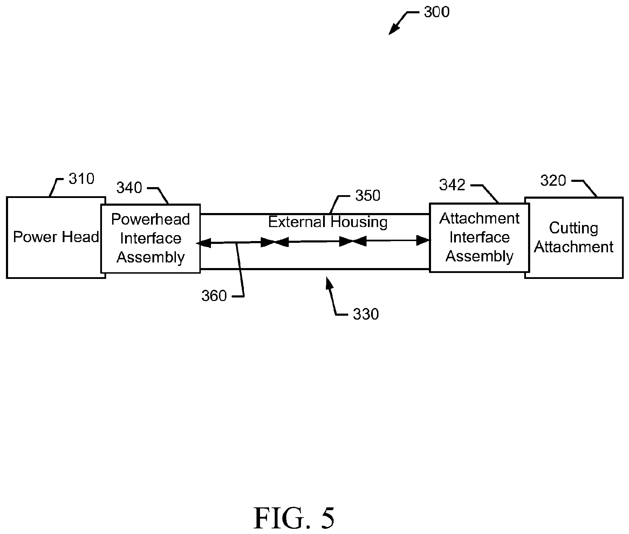

As noted above, the specific structures described in reference to FIGS. 1-4 are all examples of one embodiment. However, other example embodiments may employ other specific structures. As such, FIG. 5 is provided to illustrate a block diagram of a piece of outdoor power equipment 300 that may be configured in accordance with example embodiments of the present invention. In this regard, the outdoor power equipment 300 driveshaft for outdoor power equipment includes a power head 310 and a cutting attachment 320 that are operably coupled together via a driveshaft 330 (e.g., a dielectric or insulated driveshaft). The driveshaft 330 includes a power head interface assembly 340 configured to operably couple the driveshaft 330 to the power head 310. The driveshaft 330 also include an attachment interface assembly 342 configured to operably couple the driveshaft 330 to the cutting attachment 320. The driveshaft 330 also include an external housing 350 rigidly coupling the power head 310 to the cutting attachment 320 (e.g., via a fixed portion of the power head interface assembly 340 and the attachment interface assembly 342). The driveshaft 330 also include a segmented internal drive assembly 360 configured to provide mechanical communication of rotary power from the power head 310 to the cutting attachment 320 (e.g., via a movable portion of the power head interface assembly 340 and the attachment interface assembly 342). The segmented internal drive assembly 360 includes individually electrically insulated segments.

Accordingly, in one example embodiment, a driveshaft for outdoor power equipment is provided. The driveshaft includes a power head interface assembly configured to operably couple the driveshaft to a power head of the outdoor power equipment, an attachment interface assembly configured to operably couple the driveshaft to a cutting attachment of the outdoor power equipment, an external casing rigidly coupling the power head interface assembly to the attachment interface assembly, and a segmented internal drive assembly configured to provide mechanical communication of mechanical power from the power head to the cutting attachment. The segmented internal drive assembly includes individually electrically insulated segments.

In some cases, modifications or amplifications may further be employed as optional alterations or augmentations to the description above. These alterations or augmentations may be performed exclusive of one another or in any combination with each other. According to the claimed invention, each of the individually insulated segments comprises a segment shaft body made of non-metallic, insulating material and a segment coupler configured to couple a first segment shaft body of one segment to a second segment shaft body of an adjacent segment. In an example embodiment, the segment shaft body and the external housing may each be made of fiberglass, and the segment coupler may include metallic materials. According to the claimed invention, the segment coupler includes a bearing assembly and a carrier assembly, the carrier assembly supporting the bearing assembly proximate to the segment coupler. In an example embodiment, the carrier assembly may include a non-conductive material and one or more o-rings to affix the carrier assembly inside the external housing. In some examples, the segment coupler may be vented from an internal portion of the segmented internal drive assembly to an external portion of the segmented internal drive assembly. In an example embodiment, an air gap may be disposed between the external housing and the segment shaft body of each of the individually electrically insulated segments. In some examples, the segmented internal drive assembly may include a first insulated segment, a second insulated segment and a third insulated segment. The first insulated segment may include the first segment shaft body, the second insulated segment may include the second segment shaft body, and the third insulated segment may include a third segment shaft body. The segment coupler may couple the first segment shaft body to the second segment shaft body, and a second segment coupler may couple the second segment shaft body to the third segment shaft body. The first, second and third segment shaft bodies may turn with each other independent of the external housing. In an example embodiment, the attachment interface assembly and the power head interface assembly may each include a bearing assembly and a shaft seal. In some examples, the attachment interface assembly and the power head interface assembly may each be configured for attachment to the cutting attachment and the power head, respectively, without tools. In an example embodiment, the cutting attachment may be one of a plurality of different interchangeable cutting attachments.

The scope of protection of the current invention is defined by the appended claims.

## Claims

1. A driveshaft (130, 330) for outdoor power equipment (300), the driveshaft (130, 330) comprising:
a power head interface assembly (340) configured to operably couple the driveshaft (130, 330) to a power head (110, 310) of the outdoor power equipment (300);
an attachment interface assembly (342) configured to operably couple the driveshaft (130, 330) to a cutting attachment (120, 320) of the outdoor power equipment (300);
an external housing (132, 350) rigidly coupling the power head (110, 310) to the cutting attachment (120, 320), the external housing (132, 350) being made of an insulating material; and
a segmented internal drive assembly (360) configured to provide mechanical communication of rotary power from the power head (110, 310) to the cutting attachment (120, 320),
wherein the segmented internal drive assembly (360) comprises individually electrically insulated segments,
wherein each of the individually insulated segments comprises a segment shaft body (206) made of non-metallic, insulating material and a segment coupler (230) configured to couple a first segment shaft body of one segment to a second segment shaft body of an adjacent segment,
**characterised in that** the segment coupler (230) comprises a bearing assembly (216, 226, 260) and a carrier assembly (262), the carrier assembly (262) supporting the bearing assembly (216, 226, 260) proximate to the segment coupler (230).

2. The driveshaft (130, 330) of claim 1, wherein the segment shaft body (206) and the external housing (132, 350) are each made of fiberglass, and
wherein the segment coupler (230) includes metallic materials.

3. The driveshaft (130, 330) of any of claims1 - 2, wherein the carrier assembly (262) comprises a non-conductive material and one or more elastomeric components to affix the carrier assembly (262) inside the external housing (132, 350).

4. The driveshaft (130, 330) of any of claims 1 - 3, wherein the segment coupler (230) is vented from an internal portion of the segmented internal drive assembly (360) to an external portion of the segmented internal drive assembly (360).

5. The driveshaft (130, 330) of any claims 1 - 4, wherein an air gap (208) is disposed between the external housing (132, 350) and the segment shaft body (206) of each of the individually electrically insulated segments.

6. The driveshaft (130, 330) of any of claims 1 - 5, wherein the segmented internal drive assembly (360) comprises a first insulated segment, a second insulated segment and a third insulated segment,
wherein the first insulated segment comprises the first segment shaft body, the second insulated segment comprises the second segment shaft body, and the third insulated segment comprises a third segment shaft body,
wherein the segment coupler (230) couples the first segment shaft body to the second segment shaft body, and a second segment coupler couples the second segment shaft body to the third segment shaft body, and
wherein the first, second and third segment shaft bodies turn with each other independent of the external housing (132, 350).

7. The driveshaft (130, 330) of any of the previous claims, wherein the attachment interface assembly (342) and the power head interface assembly (340) each include a bearing assembly (216, 226, 260) and a shaft seal (218, 228).

8. An outdoor power equipment device (300) comprising:
a power head (110, 310);
a cutting attachment (120, 320); and
a driveshaft (130, 330) of any of the previous claim operably coupling the power head (110, 310) to the cutting attachment.

9. The outdoor power equipment device (300) of claim 8, where the outdoor power equipment device (300) is a handheld pole saw.

## Patentansprüche

1. Antriebswelle (130, 330) für ein Elektrogerät (300) für den Außenbereich, wobei die Antriebswelle (130, 330) Folgendes umfasst:
eine Antriebskopfschnittstellenanordnung (340), die dazu ausgelegt ist, die Antriebswelle (130, 330) mit einem Antriebskopf (110, 310) des Elektrogeräts (300) für den Außenbereich wirkzukoppeln;
eine Aufsatzschnittstellenanordnung (342), die dazu ausgelegt ist, die Antriebswelle (130, 330) mit einem Schneidaufsatz (120, 320) des Elektrogeräts (300) für den Außenbereich wirkzukoppeln;
ein Außengehäuse (132, 350), das den Antriebskopf (110, 310) starr mit dem Schneidaufsatz (120, 320) koppelt, wobei das Außengehäuse (132, 350) aus einem isolierenden Material hergestellt ist; und
eine segmentierte innere Antriebsanordnung (360), die dazu ausgelegt ist, eine mechanische Übertragung von Drehleistung von dem Antriebskopf (110, 310) auf den Schneidaufsatz (120, 320) bereitzustellen,
wobei die segmentierte innere Antriebsanordnung (360) einzeln elektrisch isolierte Segmente umfasst,
wobei jedes der einzeln isolierten Segmente einen Segmentwellenkörper (206), der aus einem nichtmetallischen, isolierenden Material hergestellt ist, und einen Segmentkoppler (230) umfasst, der dazu ausgelegt ist, einen ersten Segmentwellenkörper eines Segments mit einem zweiten Segmentwellenkörper eines benachbarten Segments zu koppeln,
**dadurch gekennzeichnet, dass** der Segmentkoppler (230) eine Lageranordnung (216, 226, 260) und eine Trägeranordnung (262) umfasst, wobei die Trägeranordnung (262) die Lageranordnung (216, 226, 260) in der Nähe des Segmentkopplers (230) stützt.

2. Antriebswelle (130, 330) nach Anspruch 1, wobei der Segmentwellenkörper (206) und das Außengehäuse (132, 350) jeweils aus Glasfaser hergestellt sind, und
wobei der Segmentkoppler (230) metallische Materialien umfasst.

3. Antriebswelle (130, 330) nach einem der Ansprüche 1 - 2, wobei die Trägeranordnung (262) ein nicht leitfähiges Material und eine oder mehrere Elastomerkomponenten umfasst, um die Trägeranordnung (262) innerhalb des Außengehäuses (132, 350) zu befestigen.

4. Antriebswelle (130, 330) nach einem der Ansprüche 1 - 3, wobei der Segmentkoppler (230) von einem inneren Abschnitt der segmentierten inneren Antriebsanordnung (360) zu einem äußeren Abschnitt der segmentierten inneren Antriebsanordnung (360) entlüftet wird.

5. Antriebswelle (130, 330) nach einem der Ansprüche 1 - 4, wobei ein Luftspalt (208) zwischen dem Außengehäuse (132, 350) und dem Segmentwellenkörper (206) jedes der einzeln elektrisch isolierten Segmente angeordnet ist.

6. Antriebswelle (130, 330) nach einem der Ansprüche 1 - 5, wobei die segmentierte innere Antriebsanordnung (360) ein erstes isoliertes Segment, ein zweites isoliertes Segment und ein drittes isoliertes Segment umfasst,
wobei das erste isolierte Segment den ersten Segmentwellenkörper umfasst, das zweite isolierte Segment den zweiten Segmentwellenkörper umfasst und das dritte isolierte Segment einen dritten Segmentwellenkörper umfasst,
wobei der Segmentkoppler (230) den ersten Segmentwellenkörper mit dem zweiten Segmentwellenkörper koppelt und ein zweiter Segmentkoppler den zweiten Segmentwellenkörper mit dem dritten Segmentwellenkörper koppelt, und
wobei sich der erste, der zweite und der dritte Segmentwellenkörper unabhängig von dem Außengehäuse (132, 350) miteinander drehen.

7. Antriebswelle (130, 330) nach einem der vorhergehenden Ansprüche, wobei die Aufsatzschnittstellenanordnung (342) und die Antriebskopfschnittstellenanordnung (340) jeweils eine Lageranordnung (216, 226, 260) und eine Wellendichtung (218, 228) umfassen.

8. Elektrogeräteeinrichtung (300) für den Außenbereich, die Folgendes umfasst:
einen Antriebskopf (110, 310);
einen Schneidaufsatz (120, 320); und
eine Antriebswelle (130, 330) nach einem der vorhergehenden Ansprüche, die den Antriebskopf (110, 310) mit dem Schneidaufsatz wirkverbindet.

9. Elektrogeräteeinrichtung (300) für den Außenbereich nach Anspruch 8, wobei die Elektrogeräteeinrichtung (300) für den Außenbereich ein handgehaltener Hochentaster ist.

## Revendications

1. Arbre d'entraînement (130, 330) pour un équipement motorisé d'extérieur (300), l'arbre d'entraînement (130, 330) comprenant :
un ensemble interface de tête motorisée (340) configuré pour coupler fonctionnellement l'arbre d'entraînement (130, 330) à une tête motorisée (110, 310) de l'équipement motorisé d'extérieur (300) ;
un ensemble interface d'accessoire (342) configuré pour coupler fonctionnellement l'arbre d'entraînement (130, 330) à un accessoire de coupe (120, 320) de l'équipement motorisé d'extérieur (300) ;
un boîtier externe (132, 350) couplant rigidement la tête motorisée (110, 310) à l'accessoire de coupe (120, 320), le boîtier externe (132, 350) étant fait d'un matériau isolant ; et
un ensemble entraînement interne segmenté (360) configuré pour fournir une communication mécanique de puissance rotative depuis la tête motorisée (110, 310) à l'accessoire de coupe (120, 320),
dans lequel l'ensemble entraînement interne segmenté (360) comprend des segments électriquement isolés individuellement,
dans lequel chacun des segments isolés individuellement comprend un corps d'arbre de segment (206) fait de matériau isolant non métallique, et un coupleur de segment (230) configuré pour coupler un premier corps d'arbre de segment d'un segment à un deuxième corps d'arbre de segment d'un segment adjacent,
**caractérisé en ce que** le coupleur de segment (230) comprend un ensemble palier (216, 226, 260) et un ensemble support (262), l'ensemble support (262) supportant l'ensemble palier (216, 226, 260) à proximité du coupleur de segment (230).

2. Arbre d'entraînement (130, 330) de la revendication 1, dans lequel le corps d'arbre de segment (206) et le boîtier externe (132, 350) sont chacun faits de fibre de verre, et
dans lequel le coupleur de segment (230) inclut des matériaux métalliques.

3. Arbre d'entraînement (130, 330) de quelconques des revendications 1 et 2, dans lequel l'ensemble support (262) comprend un matériau non conducteur et un ou plusieurs composants élastomériques pour apposer l'ensemble support (262) à l'intérieur du boîtier externe (132, 350).

4. Arbre d'entraînement (130, 330) de quelconques des revendications 1 à 3, dans lequel le coupleur de segment (230) est éventé depuis une partie externe de l'ensemble entraînement interne segmenté (360) jusqu'à une partie externe de l'ensemble entraînement interne segmenté (360).

5. Arbre d'entraînement (130, 330) de quelconques des revendications 1 à 4, dans lequel un espace d'air (208) est disposé entre le boîtier externe (132, 350) et le corps d'arbre de segment (206) de chacun des segments électriquement isolés individuellement.

6. Arbre d'entraînement (130, 330) de quelconques des revendications 1 à 5, dans lequel l'ensemble entraînement interne segmenté (360) comprend un premier segment isolé, un deuxième segment isolé, et un troisième segment isolé,
dans lequel le premier segment isolé comprend le premier corps d'arbre de segment, le deuxième segment isolé comprend le deuxième corps d'arbre de segment, et le troisième segment isolé comprend un troisième corps d'arbre de segment,
dans lequel le coupleur de segment (230) couple le premier corps d'arbre de segment au deuxième corps d'arbre de segment, et un second coupleur de segment couple le deuxième corps d'arbre de segment au troisième corps d'arbre de segment, et
dans lequel les premier, deuxième, et troisième corps d'arbre de segment tournent les uns avec les autres indépendamment du boîtier externe (132, 350).

7. Arbre d'entraînement (130, 330) de quelconques des revendications précédentes, dans lequel l'ensemble interface d'accessoire (342) et l'ensemble interface de tête motorisée (340) incluent chacun un ensemble palier (216, 226, 260) et un joint d'étanchéité d'arbre (218, 228).

8. Dispositif d'équipement motorisé d'extérieur (300), comprenant :
une tête motorisée (110, 310) ;
un accessoire de coupe (120, 320) ; et
un arbre d'entraînement (130, 330) de quelconques des revendications précédentes couplant fonctionnellement la tête motorisée (110, 310) à l'accessoire de coupe.

9. Dispositif d'équipement motorisé d'extérieur (300) de la revendication 8, où le dispositif d'équipement motorisé d'extérieur (300) est une scie à manche portative.
